# FASCICULE DE BREVET EUROPEEN

(11) **EP 3 178 741 B1**
(45) Date de publication et mention de la délivrance du brevet: **22.08.2018**
(21) Numéro de dépôt: 15306979.4
(22) Date de dépôt: 10.12.2015
(51) Int. Cl.: B64G 1/42

(54) **DISPOSITIF D'ALIMENTATION DE PUISSANCE D'UN ENGIN AÉROSPATIAL, SYSTÈME DE COMMANDE DE VÉRINS ÉLECTRIQUES D'UN LANCEUR SPATIAL ET LANCEUR SPATIAL ASSOCIÉS**
STROMZUFÜHRUNGSVORRICHTUNG FÜR EIN RAUMFAHRTGERÄT, ENTSPRECHENDES SYSTEM ZUM STEUERN DER ELEKTROZYLINDER EINER TRÄGERRAKETE UND ENTSPRECHENDE TRÄGERRAKETE
DEVICE FOR SUPPLYING POWER TO AN AEROSPACE VEHICLE, ASSOCIATED SYSTEM FOR CONTROLLING ELECTRIC ACTUATORS OF A SPACE LAUNCHER AND SPACE LAUNCHER

(43) Date de publication de la demande: 14.06.2017
(73) Titulaire: THALES, 92400 Courbevoie (FR)
(72) Inventeur: GLETON, Laurent, 6180 COURCELLES (BE); GUILLAUME, Michel, 1428 LILLOIS-WITTERZEE (BE); GOFFIN, Benoît, 5081 SAINT DENIS (BE)
(74) Mandataire: Brunelli, Gérald

(56) Documents cités:
- EP-A1- 1 481 898
- FR-A1- 2 850 213
- FR-A1- 2 855 918

## Description

L'invention porte sur un dispositif d'alimentation de puissance d'un engin aérospatial, un système de commande de vérins électriques d'un lanceur spatial et un lanceur spatial associés. Le document FR 2 855 918 décrit un système de distribution décentralisée de la puissance électrique pour satellite ou véhicule spatial.

Dans le domaine aérospatial, la tendance générale est de remplacer les actionneurs hydrauliques par des actionneurs électriques dans le but de diminuer les coûts, i.e. de mettre sur le marché des solutions économiquement plus compétitives.

En effet, le concept d'avion électrique devient une réalité avec des surfaces de contrôle qui sont actionnées par des vérins électriques, de même, pour Ariane 6, les paires d'actionneurs hydrauliques qui, sur Ariane 5, contrôlent la trajectoire du lanceur en orientant les divergents des boosters à poudre et du moteur de l'étage principal cryogénique seront remplacés par des paires d'actionneurs électriques de très haute puissance.

L'accession à de tels niveaux de puissance ne peut être obtenue que par l'élévation de la tension d'alimentation. Par exemple, pour l'étage supérieur d'Ariane 5, la puissance électrique nécessaire pour chacun des deux axes est de l'ordre 5 kW (sous 150 V) tandis que pour les étages à poudre d'Ariane 6, la puissance électrique nécessaire pour chaque axe sera de l'ordre de 70 kW (sous 330 V).

D'autre part, de nouvelles applications aérospatiales, telles que le projet Stratobus, un dirigeable autonome évoluant juste au-dessus du trafic aérien, à 20 kilomètres d'altitude, ne peuvent aboutir que dans un contexte de "tout électrique".

La criticité des missions maintenant dévolues aux actionneurs électriques impose de développer des solutions qui, tout en étant tolérantes aux pannes, ne perturbent pas la mission lors de l'occurrence d'une panne.

D'autre part, la concurrence exercée dans les marchés aérospatiaux exige de mettre en oeuvre des solutions toujours plus compétitives économiquement.

Au coeur d'un actionneur électrique se trouve une unité de commande électronique (ECPU : Electronic Control and Power Unit); la partie qui pilote le moteur électrique est constituée d'un onduleur de puissance dont les différents modes de panne ne peuvent affecter la mission.

L'électronique de puissance dans les applications à haute fiabilité comme l'aérospatiale, a besoin d'architectures capables de remplir la mission en cas de panne simple.

Cela implique donc que la solution proposée doit être robuste à un éventuel défaut d'isolation.

La loi empirique de Paschen établi la relation entre la tension de claquage ou tension critique et le produit pression-distance. Lorsque pour une altitude donnée, la pression diminue, la tension critique diminue jusqu'à une valeur minimum et puis ré-augmente. Pour une application de lanceur spatial, l'ensemble de la courbe de Paschen est parcourue, de la pression atmosphérique jusqu'au vide et donc la tension électrique doit être inférieure à la tension électrique minimum de la courbe de Paschen. Dans le cas de l'air, il en résulte que sous une tension électrique de 200V, aucun risque de décharge partielle n'existe quelle que soit l'altitude ou la pression. Bien entendu, en cas d'utilisation d'un autre gaz que l'air, il faut tenir compte d'une tension critique différente.

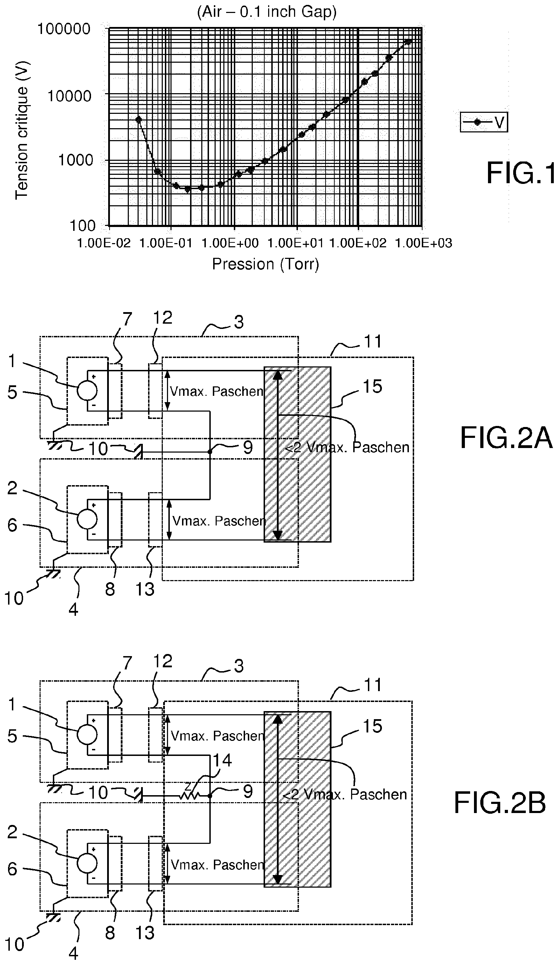

La figure 1 illustre la courbe de Paschen de l'air pour une distance entre électrodes fixée à 0,254 cm (1 Torr=1,33.10² Pa et 0,1 inch Gap correspond à un espacement de 0,254 cm entre les électrodes).

Par opposition à des composants discrets ou monolithiques, on entend par modules hybrides, des modules comprenant un ou plusieurs substrats isolés, généralement en céramique, sur lesquels des composants actifs et passifs sont interconnectés dans le but de réaliser une fonction électrique ; les composants actifs pouvant être des puces nues ou des composants encapsulés, les composants passifs pouvant être imprimés sur le substrats ou être des composants à montage de surface. Dans tous les cas, le report des composants se fait en surface. Les substrats sont encapsulés dans un boitier au travers duquel des interconnexions permettent d'accéder à la fonction électrique interne du module.

Les solutions de modules multipuces hybrides actuellement disponibles sont soit des solutions non-hermétiques à base de composants standards, généralement appelés COTS (pour acronyme de "commercial off-the-shelf" en langue anglaise) voire industriels, soit des solutions hermétiques utilisées dans le domaine spatial. Dans ces deux cas, les solutions proposées ne permettent pas de répondre parfaitement aux besoins.

L'utilisation de circuits hybrides en boîtiers hermétiques ne résout que partiellement le problème: étant hermétique, la pression interne du boîtier permet d'éviter tout problème lié à la loi de Paschen mais rien n'est prévu au niveau des interfaces électriques (contacts sous forme de broches, broches à enchâsser à la presse ou "press-fit" en langue anglaise, conducteurs nus...).

Il est connu d'utiliser des boîtiers à base de composants standards COTS à des tensions telles que la pression critique ne soit pas dépassée; et typiquement, dans l'air, la tension électrique ne devrait pas dépasser les 200V. L'inconvénient est le niveau rédhibitoire des courants et leurs dissipations thermiques résultantes.

Il est connu d'utiliser des boîtiers à base de composants standards COTS intégrés dans un équipement suffisamment hermétique pour garantir une pression interne supérieure à la pression critique. Cette mise en oeuvre de l'herméticité pose plusieurs problèmes. Un problème est la modularité, car il est difficile de mettre en oeuvre des solutions modulaires, notamment la multiplication des interfaces entre modules, or, étant donné les cadences de production nécessaires, une solution modulaire est primordiale. Un autre problème est le coût de fabrication, notamment le surcoût dû aux structures mécaniques et à l'utilisation de connecteurs renforcés. En outre, l'intégration des éléments dans un seul boîtier ne permet pas de mettre en parallèle les activités (à l'inverse d'une solution modulaire). De surcroît, une telle mise en oeuvre a également un impact de masse significatif pour supporter la surpression et la validation, sur chaque équipement, de la capacité à maintenir un certain niveau de pression interne.

Aussi l'utilisation de matériaux isolants pour enrober globalement, et sans inclusion de bulles, l'onduleur permet évidemment de résoudre la problématique Paschen, mais entraîne un surcoût élevé et un impact sur la masse de l'équipement.

Un but de l'invention est de pallier les problèmes précédemment cités, et particulièrement de proposer une solution à coût réduit qui résiste notamment à l'effet Paschen.

Aussi, il est proposé, selon un aspect de l'invention, un dispositif d'alimentation de puissance d'un engin aérospatial comprenant une alimentation électrique dont un point de potentiel intermédiaire est configuré pour être relié à la masse mécanique de l'engin aérospatial formant deux domaines de tensions électriques à l'intérieur de chacun desquels la différence maximale de potentiel électrique n'excède pas la tension électrique critique de la loi de Paschen, chaque domaine comprenant une isolation électrique indépendante.

A l'intersection des deux domaines, il est possible de créer des espaces localisés dans lesquels la tension correspond à la somme de celle des deux domaines et dans lesquels des mesures de protection contre l'effet Paschen telles que l'encapsulation dans un matériau isolant ou la pressurisation préviennent les risques de décharges partielles.

Un tel dispositif prévenant l'effet Paschen au sein de chaque domaine, permet d'y appliquer des solutions techniques à simple isolation, de manière à en réduire les coûts. Chaque domaine étant exempt de risque Paschen, un simple défaut dans l'isolant, mettant à nu un conducteur, pourra être toléré puisqu'il n'entraînera pas d'effet Paschen. D'autre part, chaque domaine étant isolé, il faudrait un double défaut d'isolement pour que des conducteurs, avec une différence de potentiel au-delà de la limite de Paschen, soient simultanément mis à nu au sein d'un milieu où les conditions de pression, distance et nature soient telles qu'un effet Paschen puisse se produire.

Un tel dispositif permet d'utiliser des composants standards COTS notamment sur des lanceurs, en évitant les problèmes liés à l'effet Paschen, et cela à coût réduit.

Dans un mode de réalisation, chaque domaine comprend une source d'alimentation électrique distincte.

Ainsi est-il possible d'utiliser deux sources différentes, l'une, principale, dont la tension est proche de la tension électrique limite de l'effet Paschen, délivre l'essentiel de la puissance requise par l'application, l'autre, auxiliaire, est dimensionnée pour fournir le complément de tension nécessaire à l'application.

En variante, chaque domaine comprend l'alimentation électrique fournie par une des deux sorties d'un pont diviseur de tension électrique appliqué à une unique source d'alimentation électrique.

Ainsi, il est possible de simplifier l'intégration de la source d'alimentation dans le lanceur et de limiter le câblage; la réduction du câblage permettant d'optimiser l'alimentation électrique par la réduction des résistances et inductances parasites du câblage.

En variante, chaque domaine comprend respectivement l'alimentation électrique fournie par une partie des cellules électriques d'une unique source d'alimentation électrique et par le reste des cellules électriques de la source d'alimentation électrique.

Il est ainsi également possible de simplifier l'intégration de la source d'alimentation dans le lanceur et de limiter le câblage et, en plus, possible d'empêcher le déclenchement d'un effet Paschen suite à une fuite électrique à la structure dans un des deux domaines.

Par exemple, le point de potentiel intermédiaire est le point milieu, séparant de manière symétrique les deux domaines de tensions électriques.

Ainsi, il est possible d'utiliser les mêmes solutions techniques d'isolement dans les deux domaines et d'assurer un retour symétrique des courants de mode commun.

Dans un mode de réalisation, chaque domaine comprend une source d'alimentation électrique distincte et le point de potentiel intermédiaire est le point milieu, et chaque domaine comprend une source d'alimentation électrique identique.

Ainsi, il est possible d'utiliser deux exemplaires d'une même source, ce qui est la solution la plus économique, lorsque l'encombrement ou la masse d'une source unique nécessite de la scinder en deux pour l'intégrer dans le lanceur.

Selon un mode de réalisation, dans lequel chaque domaine comprend l'alimentation électrique fournie par une des deux sorties d'un pont diviseur de tension électrique appliqué à une unique source d'alimentation électrique et le point de potentiel intermédiaire est le point milieu, et dans lequel le pont diviseur de tension électrique utilise deux résistances identiques en série, de manière à fournir à chacune des deux sorties du pont diviseur de tension électrique, des tensions électriques égales pour chaque domaine.

Il est ainsi possible de simplifier l'intégration de la source d'alimentation dans le lanceur et de limiter le câblage; la réduction du câblage permettant d'optimiser l'alimentation électrique par la réduction des résistances et inductances parasites du câblage.

Dans un mode de réalisation, dans lequel chaque domaine comprend respectivement l'alimentation électrique fournie par une partie des cellules électriques d'une unique source d'alimentation électrique et par le reste des cellules électriques de la source d'alimentation électrique et le point de potentiel intermédiaire est le point milieu, et dans lequel chaque domaine comprend respectivement l'alimentation électrique fournie par un nombre identique de cellules électriques d'une unique source d'alimentation électrique.

Ainsi, il est également possible de simplifier l'intégration dans le lanceur de la source d'alimentation et de limiter le câblage et, en plus, possible d'empêcher le déclenchement d'un effet Paschen suite à une fuite électrique à la structure dans un des deux domaines.

Dans un mode de réalisation, le dispositif comprend en outre une impédance configurée pour être disposée entre le point de potentiel intermédiaire et la masse mécanique de l'engin aérospatial.

Une telle impédance permet d'éviter un court-circuit de la source d'alimentation dans le cas d'un défaut d'isolement entre une des polarités de la source et la masse mécanique.

Selon un mode de réalisation, le dispositif comprend en outre au moins un onduleur hybride muni d'un boîtier externe électriquement isolant, par exemple en plastique, configuré pour commander au moins une phase respective d'un moteur électrique polyphasé de l'engin aérospatial et alimenté par les deux domaines de tensions électriques.

Ainsi, il est possible d'utiliser des technologies de réalisation disponibles, par exemple, dans le domaine de l'automobile afin de disposer d'une solution technique à bas coût. D'autre part, la capacité d'intégrer dans un seul module la totalité des différentes puces de puissance nécessaires à la commande d'au moins une phase permet, en optimisant l'implantation physique de la fonction, d'en améliorer le rendement par la réduction des effets inductifs et résistifs parasites.

Dans un mode de réalisation, ledit onduleur hybride comprend des conducteurs de puissance enrobés d'une couche électriquement isolante et directement encapsulés dans ledit boîtier externe de l'onduleur hybride.

Ainsi, un défaut dans une des deux barrières isolantes n'est pas suffisant pour mettre simultanément à nu deux conducteurs entre lesquels une différence de potentiel provoquerait un effet Paschen. Cette double isolation permet de réduire les contraintes de qualité de réalisation et donc le coût de chaque isolation.

Selon un mode de réalisation, ledit onduleur hybride comprend au moins une puce électronique interne et/ou une interconnexion interne encapsulée(s) dans un isolant électrique plastique, tel un gel, par exemple injecté sous vide.

Ainsi, le gel, en absence de bulle, délimite un espace continu électriquement isolant exempt d'effet Paschen. Il devient alors possible de développer, à l'intérieur de cet espace, des différences de potentiel supérieures à la tension limite de Paschen applicable à l'extérieur de cet espace. La mise en oeuvre de gel injecté sous vide est une technique couramment utilisée dans les modules hybrides COTS et est donc maîtrisée et à faible coût; l'injection sous vide permettant de réduire fortement l'apparition de bulles et leur taille. Cependant, la présence de bulles ne conduit à un risque Paschen uniquement lorsq'une bulle met en liaison deux conducteurs entre lesquels existe une différence de potentiel au-delà de la tension électrique limite Paschen et le monde extérieur, de façon à présenter les conditions simultanées de tension, de pression et de distance. Dans les cas de bulles internes au gel, la durée d'une mission de lanceur ou les conditions d'une application aéronautique ne permettent pas à la pression interne à la bulle de descendre à un niveau critique à cause de la porosité du gel. D'autre part, tous les cas de bulles ne couvrant qu'un des deux domaines de tension ne conduisent pas à l'effet Paschen et sont donc tolérables. La tolérance aux bulles, n'entraînant pas d'effet Paschen, permet de réduire les contraintes sur la qualité de l'injection du gel et donc d'en réduire le coût.

Dans un mode de réalisation, ledit onduleur hybride comprend au moins une interface de puissance, telle une barre omnibus ou barre de distribution pour "busbar" en langue anglaise, encapsulée dans un isolant électrique plastique, par exemple une résine.

L'encapsulation dans un milieu isolant de l'interface de puissance permet ainsi de réaliser une interconnexion entre le module hybride et le monde extérieur exempte de risque d'effet Paschen. Dans le cas où l'interface de puissance comprend plusieurs interconnexions avec des différences de potentiel au-delà de la tension limite Paschen, l'isolation aura comme contrainte de ne pas comporter de bulle mettant en liaison au moins deux conducteurs entre lesquels existe une différence de potentiel au-delà de la limite Paschen et le monde extérieur.

Selon un mode de réalisation, chaque interface de puissance est encapsulée indépendamment dans ledit isolant électrique plastique.

Ainsi, seul un double défaut permettrait de mettre en liaison au moins deux conducteurs entre lesquels existe une différence de potentiel au-delà de la limite Paschen et le monde extérieur. Cet avantage permet de réduire les contraintes sur la qualité de l'isolation et donc d'en réduire le coût.

Dans un mode de réalisation, ledit onduleur hybride comprend au moins une interface bas-niveau de commande comprenant au moins un fil muni d'une gaine électriquement isolante et/ou au moins un circuit flexible électriquement isolé.

Ainsi, les signaux bas-niveau de commande qui dépendent de l'un ou l'autre domaine, suivant l'état de la commutation de l'onduleur, peuvent être conduits aux fonctions de commande sous une gaine isolante continue, depuis l'intérieur du gel. Chaque fil ou conducteur de circuit flexible étant isolé individuellement, il faudrait une double défaillance d'isolation pour que deux conducteurs, appartenant à des domaines différents soient mis à nu simultanément dans le milieu où les conditions de l'effet Paschen sont rencontrées. Cet effet de double isolation permet de diminuer les contraintes sur l'isolation et d'en diminuer le coût.

Dans un mode de réalisation, le dispositif comprend au moins un circuit externe à l'onduleur hybride, connecté à l'interface bas-niveau de commande, comprenant au moins une partie, dans laquelle la tension électrique reste inférieure à la tension électrique de claquage, recouverte d'un isolant électrique plastique, comme de la résine.

Il est ainsi possible d'isoler ensemble tous les composants des fonctions de commande qui sont électriquement liés à un domaine, de telle manière qu'au sein d'un recouvrement isolant, la tension ne dépasse pas la limite de Paschen. De cette façon, il faudrait une double défaillance d'isolation pour que deux conducteurs, appartenant à des domaines différents soient mis à nu simultanément dans le milieu où les conditions de l'effet Paschen sont rencontrées. Cet effet de double isolation permet de diminuer les contraintes sur l'isolation et, par là même, d'en diminuer le coût.

Il est également proposé, selon un autre aspect de l'invention, un système de commande de vérins électriques d'un lanceur spatial comprenant un dispositif tel que précédemment décrit, le moteur électrique polyphasé actionnant un vérin.

Il est également proposé, selon un autre aspect de l'invention, un lanceur spatial muni d'un tel système.

L'invention sera mieux comprise à l'étude de quelques modes de réalisation décrits à titre d'exemples nullement limitatifs et illustrés par les dessins annexés sur lesquels :
- la figure 1 illustre schématiquement la courbe de Paschen applicable à l'air;
- les figures 2A, 2B, 3A, 3B, 4A, 4B, 4C et 4D illustrent schématiquement des dispositifs selon différents aspects de l'invention;
- les figures 5a, 5b, et 6 à 9 représentent schématiquement un onduleur hybride muni d'un boîtier externe électriquement isolant d'un dispositif selon un aspect de l'invention;
- les figures 10a et 10b illustrent schématiquement un circuit externe à l'onduleur hybride d'un dispositif selon un aspect de l'invention; et
- les figures 11a et 11b illustrent l'utilisation d'un blindage électrostatique dans un dispositif selon un aspect de l'invention.

Sur les différentes figures, les éléments ayant des références identiques sont identiques.

Le dispositif d'alimentation de puissance d'un engin aérospatial selon l'invention comprend une alimentation électrique dont un point de potentiel intermédiaire est configuré pour être relié à la masse mécanique de l'engin aérospatial formant deux domaines de tensions électriques à l'intérieur de chacun desquels la différence maximale de potentiel électrique n'excède pas la tension électrique critique de la loi de Paschen, chaque domaine comprenant une isolation électrique indépendante.

A l'intersection des deux domaines, il est possible de créer des espaces localisés où la tension correspond à la somme de celle des deux domaines et où des mesures de protection contre l'effet Paschen telles que l'encapsulation dans un matériau isolant ou la pressurisation préviennent les risques de décharges partielles.

Un premier mode de réalisation du dispositif est illustré sur la figure 2A, dans lequel le dispositif d'alimentation de puissance d'un engin aérospatial comprend deux sources d'alimentation électrique distinctes, en l'espèce deux batteries électriques 1, 2, une pour chacun des deux domaines 3, 4 de tension électrique.

Chaque batterie électrique 1, 2, est à l'intérieur d'un boîtier respectif 5, 6, muni d'un connecteur respectif 7, 8. Un point de potentiel intermédiaire 9 est relié à la masse mécanique 10 de l'engin aérospatial.

Le dispositif comprend un équipement 11 muni de deux connecteurs 12, 13.

A l'intersection des deux domaines 3, 4, il est possible de créer des espaces localisés, par exemple l'espace 15 dans lequel la tension correspond à la somme de celle des deux domaines 3, 4 et dans lequel des mesures de protection contre l'effet Paschen telles que l'encapsulation dans un matériau isolant ou la pressurisation préviennent les risques de décharges partielles. Ces mesures de protection comprennent une succession continue de moyens d'isolation et chacune de ces successions est indépendante de celle de l'autre domaine.

En variante, la figure 2B représente un dispositif similaire à celui de la figure 2A, comprenant en outre une impédance 14 disposée entre le point de potentiel intermédiaire 9 et la masse mécanique 10 de l'engin aérospatial.

Ces deux modes de réalisation dans lesquels on utilise deux batteries identiques de 200 V maximum, dans le cas de boîtiers emplis d'air, permettent de ne pas développer une tension électrique supérieure à 200 V au sein de chaque batterie, y compris par rapport à la structure, ce qui les rend non soumis à l'effet Paschen.

Ils permettent de regrouper les deux polarités d'une même batterie dans un même connecteur au sein duquel la tension ne dépasse pas 200 V, y compris par rapport à la structure, ce qui le rend non soumis à l'effet Paschen.

En regroupant les deux polarités au sein du même câble, il est donc possible de réduire fortement l'inductance de ligne.

Cela permet également de ne pas développer de tension électrique supérieure à 200 V entre chaque ligne d'alimentation de l'équipement et le point de potentiel intermédiaire 9 ce qui permet la mise en oeuvre de certaines protections contre l'effet Paschen, comme le gainage ou l'enrobage des conducteurs, l'encapsulation ou le blindage électrostatique des connections.

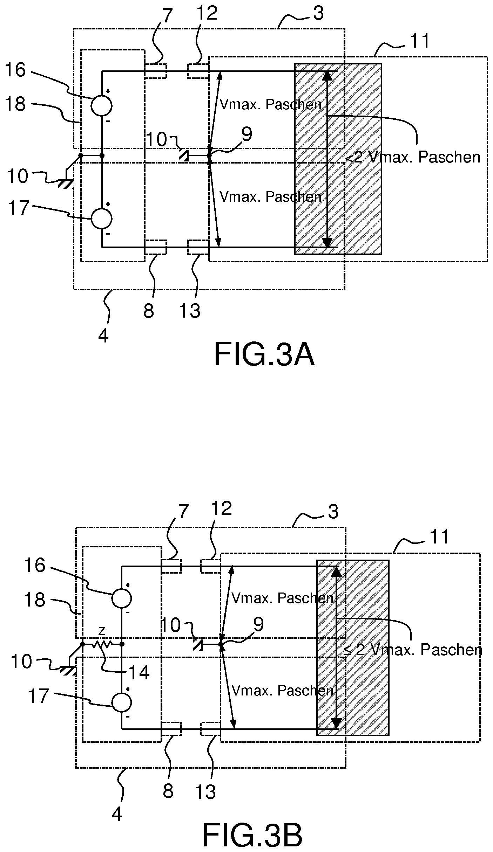

Un deuxième mode de réalisation du dispositif est illustré par la figure 3A, dans lequel chaque domaine 3, 4 du dispositif d'alimentation de puissance d'un engin aérospatial comprend respectivement l'alimentation électrique fournie par une partie 16 des cellules électriques d'une unique source d'alimentation électrique ou batterie électrique et par le reste ou l'autre partie 17 des cellules électriques de la source d'alimentation électrique. La batterie électrique unique comprend un unique boîtier 18 qui est muni des deux connecteurs 7, 8.

En variante, la figure 3B représente un dispositif similaire à celui de la figure 3A, comprenant en outre une impédance 14 disposée entre le point de potentiel intermédiaire 9 et la masse mécanique 10 de l'engin aérospatial.

Ces deux modes de réalisation, dans lesquels on n'utilise qu'une seule batterie dont une partie des éléments ou cellules alimente un domaine et dont l'autre partie alimente l'autre domaine, permettent de ne gérer qu'une seule batterie, de réduire le nombre de connecteurs, et de réduire la masse des câbles.

Ils permettent également de ne pas développer de tension électrique supérieure à 200 V au sein de chaque connecteur de batterie, par rapport à la structure, ce qui les rend non soumis à l'effet Paschen.

Cela permet également de ne pas développer de tension électrique supérieure à 200 V entre, respectivement, chaque ligne d'alimentation de l'équipement et la structure, ce qui permet la mise en oeuvre de certaines protections contre l'effet Paschen, comme le gainage ou l'enrobage des conducteurs, l'encapsulation ou le blindage électrostatique des connections..

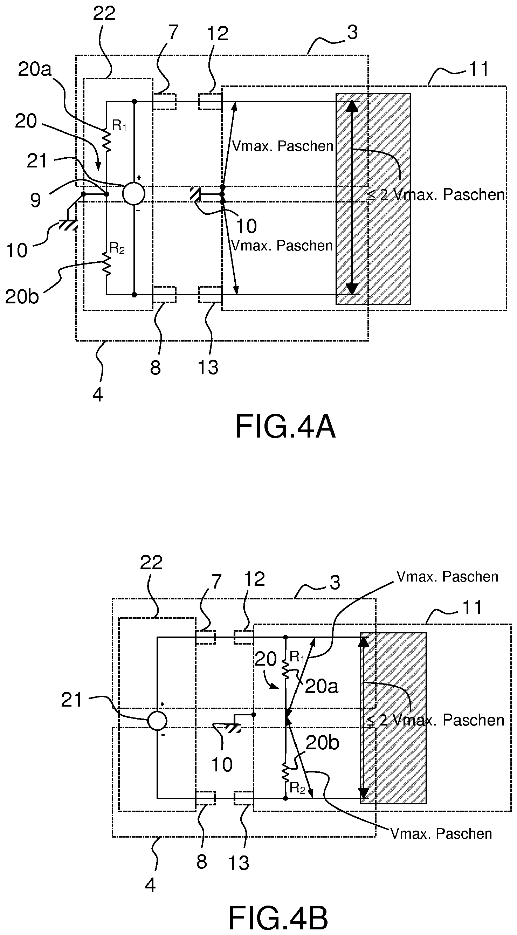

Un troisième mode de réalisation du dispositif est illustré sur la figure 4A, dans lequel chaque domaine 3, 4 du dispositif d'alimentation de puissance d'un engin aérospatial comprend respectivement l'alimentation électrique fournie par chacune des deux résistances 20a, 20b d'un pont diviseur 20 de tension électrique disposé en parallèle d'une unique source d'alimentation électrique ou batterie électrique 21. La batterie électrique unique 21 comprend un unique boîtier 22 qui est muni des deux connecteurs 7, 8. Le pont diviseur 20 de tension est disposé dans le boîtier 22.

En variante, la figure 4B représente un dispositif similaire à celui de la figure 4A, dans lequel le pont diviseur 20 de tension est disposé dans l'équipement 11.

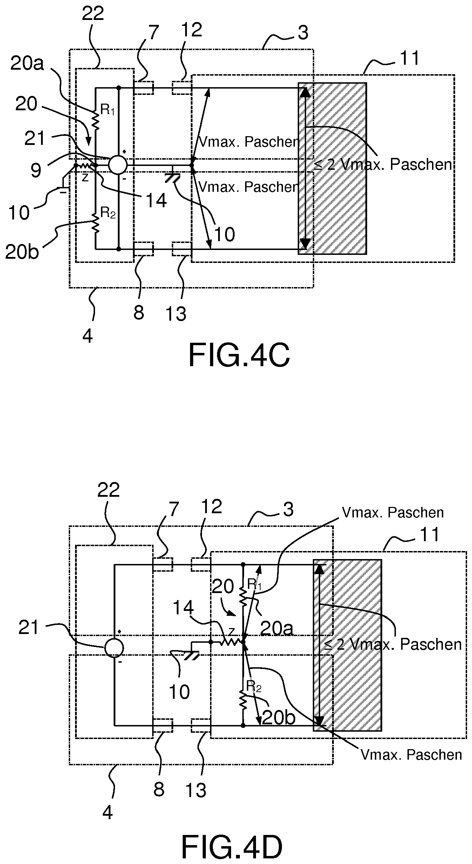

En variante, les figure 4C et 4D représentent deux dispositifs respectivement similaires à ceux des figures 4A et 4B, comprenant en outre une impédance 14 disposée entre le point de potentiel intermédiaire 9 et la masse mécanique 10 de l'engin aérospatial.

Dans tous les dispositifs selon l'invention, le point de potentiel intermédiaire peut être le point milieu, séparant ainsi de manière symétrique les deux domaines de tensions électriques.

Le dispositif peut également comprendre au moins un onduleur hybride muni d'un boîtier externe 32 électriquement isolant, par exemple en plastique, configuré pour commander au moins une phase respective d'un moteur électrique polyphasé de l'engin aérospatial et alimenté par les deux domaines de tensions électriques.

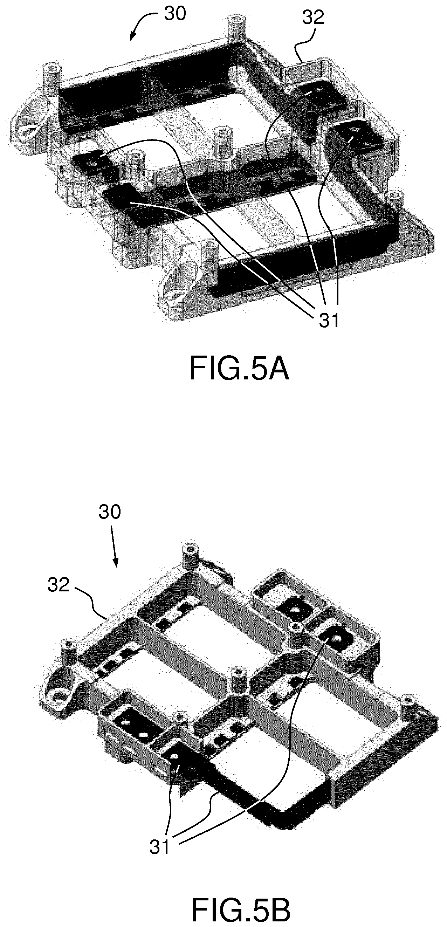

Un tel onduleur hybride 30, tel que représenté sur les figures 5a et 5b, peut comprendre des conducteurs de puissance enrobés d'une couche électriquement isolante 31 et directement encapsulés dans le boîtier externe 32 de l'onduleur hybride 30.

Les conducteurs de puissance sont des barres de cuivre ou d'aluminium enrobées d'une couche isolante. Ces conducteurs sont encapsulés directement dans le boîtier plastique 32 de l'onduleur hybride, par exemple comme pièce injectée ou par collage.

Dès lors, un défaut d'un isolant (celui d'une barre omnibus ou barre de distribution pour "busbar" en langue anglaise ou du cadre) n'est pas suffisant pour mettre à nu deux conducteurs de potentiels opposés, ce qui pourrait alors conduire à un arc électrique. Une double barrière isolante est donc mise en oeuvre.

L'architecture externe de l'hybride permet également la mise en oeuvre de techniques de moulage automatisées.

La protection des puces et des interconnexions internes peut être réalisée au travers d'un isolant électrique plastique, comme du gel injecté sous vide ou une résine. Ce processus est déjà largement utilisé et maîtrisé dans les boîtiers hybrides standards COTS. Sa mise en oeuvre est donc parfaitement industrielle et de coût réduit.

Un tel isolant électrique plastique permet d'assurer la tenue par rapport à l'effet Paschen. Sa mise en oeuvre sous vide permet de réduire fortement la présence de bulles ainsi que leur taille éventuelle. Il n'est donc pas possible d'avoir deux potentiels opposés dans une même bulle et même dans une telle éventualité, le risque de claquage n'existe que pour des missions suffisamment longues, telles des missions de satellites, induisant une diminution progressive de la pression au sein de la bulle (porosité intrinsèque de l'isolant plastique) jusqu'à atteindre la pression critique. Des décharges partielles peuvent alors se produire entraînant la dégradation progressive de l'isolant. Ce phénomène n'est pas présent dans les applications aéronautiques et lanceurs.

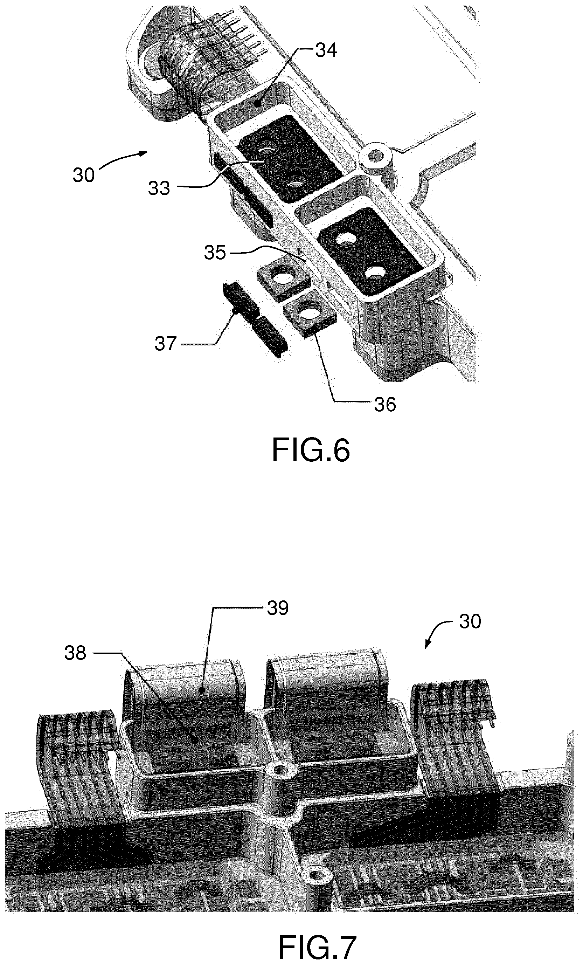

Comme illustré sur la figure 6, les interfaces de puissance ou busbars 33 sont entourées de murs 34 permettant un moulage de connexions boulonnées. Pour des raisons de simplification du cadre (pièce injectée), des ouvertures 35 sont prévues latéralement afin de permettre l'insertion des écrous 36 nécessaires à la réalisation des connexions boulonnées. Ces ouvertures 35 sont ensuite comblées par de petits bouchons 37 en matière plastique.

Lorsque la connexion de puissance est réalisée, il est alors possible de venir injecter un isolant électrique plastique 38, comme une résine isolante, dans la cavité aménagée à cet effet délimitée par les murs 34, comme illustré sur la figure 7. La résine injectée doit alors recouvrir toutes les parties conductrices non isolées et déborder sur l'isolant du conducteur de puissance isolé 39, de façon à assurer une continuité d'isolement.

Cette opération est par ailleurs automatisable. Un élément important est que chaque potentiel bénéficie de sa propre chambre d'injection. L'avantage majeur est que dans ce cas, le moulage ne doit pas être obligatoirement fait au vide comme dans le cas du gel interne. En effet, dans ce cas il n'est pas possible d'avoir dans une même bulle deux potentiels opposés puisqu'ils sont moulés indépendamment.

A noter aussi que même dans le cas d'une bulle mettant à nu un conducteur (cas très hypothétique compte-tenu du volume injecté) le claquage Paschen reste impossible car la différence de potentiel entre le conducteur et la structure reste en dessous du seuil de tension critique.

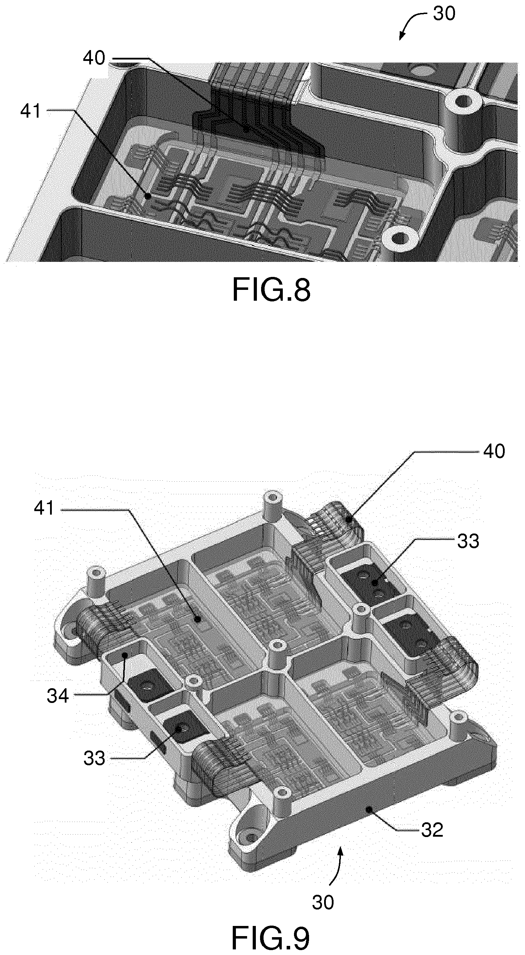

Comme illustré sur la figure 8, l'onduleur hybride 30 peut comprendre au moins une interface bas-niveau de commande comprenant au moins un fil muni d'une gaine électriquement isolante et/ou au moins un circuit flexible électriquement isolé 40, par exemple au moyen d'une encapsulation isolante de type Kapton.

Les zones d'interconnexions internes sont emprisonnées dans un isolant électrique plastique tel du gel 41. La gaine (fils) ou l'encapsulation (circuit flexible) assurent l'isolation vis-à-vis de l'extérieur. L'isolant électrique plastique recouvre une partie de la gaine (fil) ou de l'encapsulation (circuit flexible), de manière à assurer une continuité d'isolation. Tout simple défaut d'isolation à ce niveau reste acceptable (tension max de 200V).

Dans le cas du circuit flexible, une bulle d'air peut être présente entre deux conducteurs, ce qui n'occasionne pas de problème dans le cas d'applications aéronautiques ou lanceurs.

La figure 9 représente schématiquement un onduleur hybride comprenant les différents éléments cités précédemment.

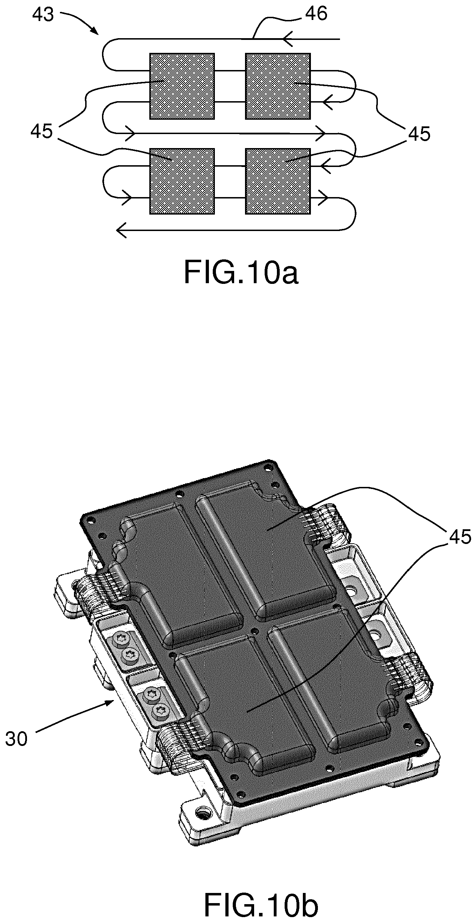

A l'autre extrémité des interconnexions bas-niveaux, sur le circuit associé 43, externe à l'onduleur hybride 30, comme illustré sur les figure 10a et 10b, il est également possible d'appliquer une technique de moulage. Il faut au préalable définir les îlots 45 au sein desquels la tension maximale reste inférieure à 200V en valeur absolue. On applique alors un isolant électrique plastique, tel un vernis épais indépendamment sur chaque îlot. Cette opération peut être automatisée par une machine (identique à celle utilisée pour le moulage des conducteurs de puissance) qui dépose la résine tout en se déplaçant progressivement en zig-zag 46, comme représenté schématiquement sur la figure 10a.

Comme illustré sur la figure 10b, le circuit associé 43, externe à l'onduleur hybride 30 peut être disposé sur l'onduleur hybride 30.

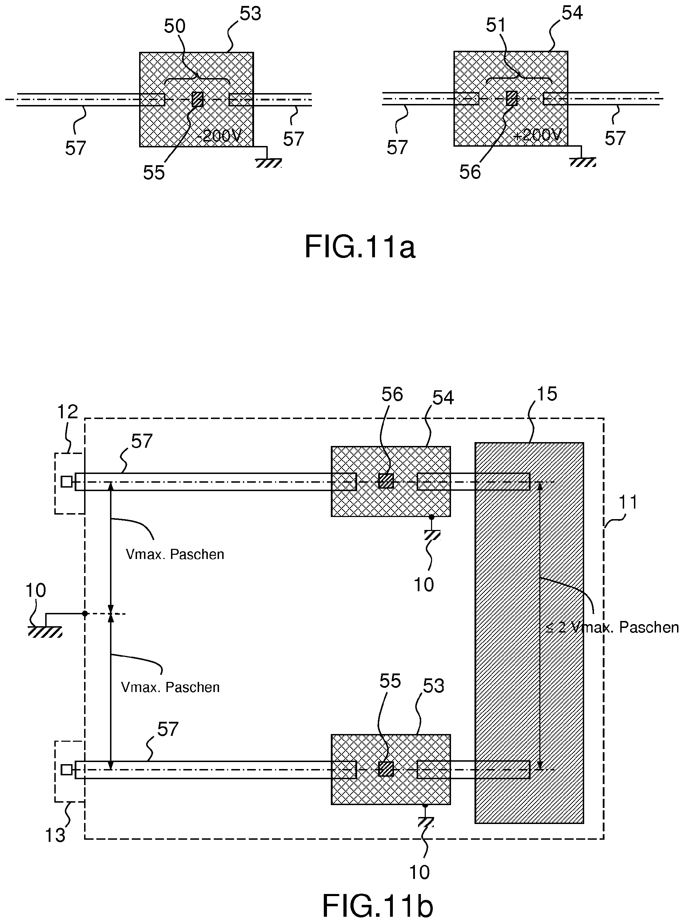

Comme mentionné précédemment, il est possible d'utiliser un blindage électrostatique sous forme de "chambre électrostatique" ou cage de Faraday, dont le principe est illustré sur les figures 11a et 11b. Le principe consiste à entourer une portion d'un conducteur isolé 57 mise à nu 50, 51 ou une connexion de puissance 55, 56 de chaque domaine 3, 4 par une cage de faraday métallique 53, 54 mise au potentiel de structure 10. Ainsi, la pression à l'intérieur de la chambre électrostatique 53, 54 peut baisser librement tant que la différence de tension électrique entre le conducteur mis à nu 50, 51 ou la connexion de puissance 55, 56 et les parois de la cage de Faraday 53, 54 est limitée à une tension électrique inférieure à la tension critique de Paschen. Ainsi aussi, la tension entre les deux portions de conducteur nu 50, 51 ou des connections de puissance 55, 56 peut-elle être supérieure à la tension critique de Paschen sans entraîner de risque de décharge partielle.

Cela permet de pouvoir effectuer une connexion aisément débranchable, sans abîmer un isolant plastique, pour une éventuelle réparation avant utilisation.

Dans le cas de l'air, si l'alimentation de 400V est symétrisé -200V /+200V, la différence de potentiel électrique entre une connexion 55, 56 et les murs de la "la chambre électrostatique" 53, 54 reste inférieure à la tension critique de Paschen.

## Revendications

1. Dispositif d'alimentation de puissance d'un engin aérospatial comprenant une alimentation électrique dont un point de potentiel intermédiaire (9) est configuré pour être relié à la masse mécanique (10) de l'engin aérospatial formant deux domaines de tensions électriques (3, 4) à l'intérieur de chacun desquels la différence maximale de potentiel électrique n'excède pas la tension électrique critique de la loi de Paschen, chaque domaine (3, 4) comprenant une isolation électrique indépendante.

2. Dispositif selon la revendication 1, dans lequel chaque domaine (3, 4) comprend une source d'alimentation électrique distincte (1, 2).

3. Dispositif selon la revendication 1, dans lequel chaque domaine (3, 4) comprend l'alimentation électrique fournie par une des deux sorties d'un pont diviseur (20) de tension électrique appliqué à une unique source d'alimentation électrique (21).

4. Dispositif selon la revendication 1, dans lequel chaque domaine (3, 4) comprend respectivement l'alimentation électrique fournie par une partie des cellules électriques (16) d'une unique source d'alimentation électrique et par le reste des cellules électriques (17) de la source d'alimentation électrique.

5. Dispositif selon l'une des revendications précédentes, dans lequel le point de potentiel intermédiaire (9) est le point milieu, séparant de manière symétrique les deux domaines (3, 4) de tensions électriques.

6. Dispositif selon la revendication 5 en dépendance de la revendication 2, dans lequel chaque domaine (3, 4) comprend une source d'alimentation électrique identique.

7. Dispositif selon la revendication 5 en dépendance de la revendication 3, dans lequel le pont diviseur (20) de tension électrique utilise deux résistances (R1, R2) identiques en série, de manière à fournir à chacune des deux sorties du pont diviseur (20) de tension électrique, des tensions électriques égales pour chaque domaine (3, 4).

8. Dispositif selon la revendication 5 en dépendance de la revendication 4, dans lequel chaque domaine (3, 4) comprend respectivement l'alimentation électrique fournie par un nombre identique de cellules électriques d'une unique source d'alimentation électrique.

9. Dispositif selon l'une des revendications précédentes, comprenant en outre une impédance (Z) configurée pour être disposée entre le point de potentiel intermédiaire (9) et la masse mécanique (10) de l'engin aérospatial.

10. Dispositif selon l'une des revendications précédentes comprenant en outre au moins un onduleur hybride (30) muni d'un boîtier externe (32) électriquement isolant configuré pour commander au moins une phase respective d'un moteur électrique polyphasé de l'engin aérospatial et alimenté par les deux domaines (3, 4) de tensions électriques.

11. Dispositif selon la revendication 10, dans lequel ledit onduleur hybride (30) comprend des conducteurs de puissance enrobés d'une couche électriquement isolante (31) et directement encapsulés dans ledit boîtier externe (32) de l'onduleur hybride (30).

12. Dispositif selon la revendication 10 ou 11, dans lequel ledit onduleur hybride (30) comprend au moins une puce électronique interne et/ou une interconnexion interne encapsulée(s) dans un isolant électrique plastique (41).

13. Dispositif selon l'une des revendications 10 à 12, dans lequel ledit onduleur hybride (30) comprend au moins une interface de puissance (33) encapsulée dans un isolant électrique plastique (38).

14. Dispositif selon la revendication 13, dans lequel chaque interface de puissance (33) est encapsulée indépendamment dans ledit isolant électrique plastique (38).

15. Dispositif selon l'une des revendications 10 à 14, dans lequel ledit onduleur hybride (30) comprend au moins une interface bas-niveau de commande comprenant au moins un fil muni d'une gaine électriquement isolante et/ou au moins un circuit flexible électriquement isolé (40).

16. Dispositif selon la revendication 15, comprenant au moins un circuit externe (43) à l'onduleur hybride (30), connecté à l'interface bas-niveau de commande (40), comprenant au moins une partie (45) recouverte d'un isolant électrique plastique.

17. Dispositif selon l'une des revendications précédentes, dans lequel au moins une isolation électrique d'un domaine (3, 4) comprend au moins une chambre électrostatique.

18. Système de commande de vérins électriques d'un lanceur spatial comprenant un dispositif selon l'une des revendications 10 à 17, le moteur électrique polyphasé actionnant un vérin.

19. Lanceur spatial muni d'un système selon la revendication 18.

## Patentansprüche

1. Vorrichtung zum Versorgen eines Raumfahrzeugs mit Leistung, umfassend eine Stromversorgung, von der ein Zwischenpotentialpunkt (9) zum Verbinden mit der mechanischen Masse (10) des Raumfahrzeugs konfiguriert ist, das zwei elektrische Spannungsbereiche (3, 4) bildet, in deren Innerem die maximale elektrische Potentialdifferenz die kritische elektrische Paschen-Gesetz-Spannung nicht übersteigt, wobei jeder Bereich (3, 4) eine unabhängige elektrische Isolierung umfasst.

2. Vorrichtung nach Anspruch 1, bei der jeder Bereich (3, 4) eine eigene Stromversorgungsquelle (1, 2) umfasst.

3. Vorrichtung nach Anspruch 1, bei der jeder Bereich (3, 4) die Stromversorgung umfasst, die von einem der zwei Ausgänge einer Brücke (20) zum Teilen von an eine einzige Stromversorgungsquelle (21) angelegter elektrischer Spannung geliefert wird.

4. Vorrichtung nach Anspruch 1, bei der jeder Bereich (3, 4) jeweils die Stromversorgung umfasst, die von einem Teil der Stromzellen (16) einer einzigen Stromversorgungsquelle und vom Rest der Stromzellen (17) der Stromversorgungsquelle geliefert wird.

5. Vorrichtung nach einem der vorherigen Ansprüche, bei der der Zwischenpotentialpunkt (9) der Punkt auf halbem Weg ist, der auf symmetrische Weise die zwei elektrischen Spannungsbereiche (3, 4) trennt.

6. Vorrichtung nach Anspruch 5 in Abhängigkeit von Anspruch 2, bei der jeder Bereich (3, 4) eine identische Stromversorgungsquelle umfasst.

7. Vorrichtung nach Anspruch 5 in Abhängigkeit von Anspruch 3, bei der die elektrische Spannungsteilerbrücke (20) zwei identische Widerstände (R1, R2) in Serie benutzt, um an jeden von zwei Ausgängen der elektrischen Spannungsteilerbrücke (20) gleiche elektrische Spannungen für jeden Bereich (3, 4) anzulegen.

8. Vorrichtung nach Anspruch 5 in Abhängigkeit von Anspruch 4, bei der jeder Bereich (3, 4) jeweils die Stromversorgung umfasst, die von einer identischen Anzahl von Stromzellen einer einzigen Stromversorgungsquelle geliefert wird.

9. Vorrichtung nach einem der vorherigen Ansprüche, die ferner eine Impedanz (Z) umfasst, konfiguriert zum Anordnen zwischen dem Zwischenpotentialpunkt (9) und der mechanischen Masse (10) des Raumschiffs.

10. Vorrichtung nach einem der vorherigen Ansprüche, das ferner wenigstens einen Hybridwechselrichter (30) umfasst, ausgestattet mit einem elektrisch isolierenden Außenkasten (32), der zum Steuern wenigstens einer jeweiligen Phase eines mehrphasigen Elektromotors des Raumschiffs konfiguriert ist und von den beiden elektrischen Spannungsbereichen (3, 4) gespeist wird.

11. Vorrichtung nach Anspruch 10, bei der der Hybridwechselrichter (30) Leistungsleiter umfasst, umhüllt von einer elektrisch isolierenden Schicht (31) und direkt im Außenkasten (32) des Hybridwechselrichters (30) verkapselt.

12. Vorrichtung nach Anspruch 10 oder 11, bei der der Hybridwechselrichter (30) wenigstens einen internen elektronischen Chip und/oder eine interne verkapselte Verbindung in einer elektrischen Kunststoffisolierung (41) umfasst.

13. Vorrichtung nach einem der Ansprüche 10 bis 12, bei der der Hybridwechselrichter (30) wenigstens eine Leistungsschnittstelle (33) umfasst, die in einer elektrischen Kunststoffisolierung (38) verkapselt ist.

14. Vorrichtung nach Anspruch 13, bei der jede Leistungsschnittstelle (33) unabhängig in der elektrischen Kunststoffisolierung (38) verkapselt ist.

15. Vorrichtung nach einem der Ansprüche 10 bis 14, bei der der Hybridwechselrichter (30) wenigstens eine Low-Level-Steuerschnittstelle umfasst, umfassend wenigstens eine Ader, die mit einem elektrisch isolierenden Mantel und/oder wenigstens einer flexiblen, elektrisch isolierenden Schaltung (40) ausgestattet ist.

16. Vorrichtung nach Anspruch 15, die wenigstens eine externe Schaltung (43) mit dem Hybridwechselrichter (30) umfasst, verbunden mit der Low-Level-Steuerschnittstelle (40), die wenigstens einen mit einer elektrischen Kunststoffisolierung bedeckten Teil (45) umfasst.

17. Vorrichtung nach einem der vorherigen Ansprüche, bei der wenigstens eine elektrische Isolierung eines Bereichs (3, 4) wenigstens eine elektrostatische Kammer umfasst.

18. System zum Steuern von elektrischen Aktuatoren einer Trägerrakete, das eine Vorrichtung nach einem der Ansprüche 10 bis 17 umfasst, wobei der mehrphasige Elektromotor einen Aktuator betätigt.

19. Trägerrakete, ausgestattet mit einem System nach Anspruch 18.

## Claims

1. A device for supplying power to an aerospace craft comprising an electric power supply, an intermediate potential point (9) of which is configured to be connected to the mechanical ground (10) of the aerospace craft forming two ranges (3, 4) of electric voltages, with the maximum electric potential difference within each range not exceeding the Paschen law critical electric voltage, each range (3, 4) comprising an independent electric insulation.

2. The device as claimed in claim 1, wherein each range (3, 4) comprises a distinct electric power supply source (1, 2).

3. The device as claimed in claim 1, wherein each range (3, 4) comprises the electric power supply provided by one of the two outputs of a bridge (20) for splitting electric voltage applied to a single electric power supply source (21).

4. The device as claimed in claim 1, wherein each range (3, 4) respectively comprises the electric power supply provided by part of the electric cells (16) of a single electric power supply source and by the remainder of the electric cells (17) of the electric power supply source.

5. The device as claimed in any one of the preceding claims, wherein the intermediate potential point (9) is the midway point, symmetrically separating the two ranges (3, 4) of electric voltages.

6. The device as claimed in claim 5 as dependent on claim 2, wherein each range (3, 4) comprises an identical electric power supply source.

7. The device as claimed in claim 5 as dependent on claim 3, wherein the bridge (20) for splitting electric voltage uses two identical resistors (R1, R2) in series, so as to supply each of the two outputs of the bridge (20) for splitting electric voltage with equal electric voltages for each range (3, 4).

8. The device as claimed in claim 5 as dependent on claim 4, wherein each range (3, 4) respectively comprises the electric power supply supplied by an identical number of electric cells of a single electric power supply source.

9. The device as claimed in any one of the preceding claims, further comprising an impedance (Z) configured to be disposed between the intermediate potential point (9) and the mechanical ground (10) of the aerospace craft.

10. The device as claimed in any one of the preceding claims, further comprising at least one hybrid inverter (30) provided with an electrically insulating outer casing (32) configured to control at least one respective phase of a polyphase electric motor of the aerospace craft and supplied by the two ranges (3, 4) of electric voltages.

11. The device as claimed in claim 10, wherein said hybrid inverter (30) comprises power conductors coated with an electrically insulating layer (31) and directly encapsulated in said outer casing (32) of the hybrid inverter (30).

12. The device as claimed in claim 10 or 11, wherein said hybrid inverter (30) comprises at least one internal electronic chip and/or one internal interconnection encapsulated in a plastic electric insulation (41).

13. The device as claimed in any one of claims 10 to 12, wherein said hybrid inverter (30) comprises at least one power interface (33) encapsulated in a plastic electric insulation (38).

14. The device as claimed in claim 13, wherein each power interface (33) is independently encapsulated in said plastic electric insulation (38).

15. The device as claimed in any one of claims 10 to 14, wherein said hybrid inverter (30) comprises at least one low-level control interface comprising at least one wire provided with an electrically insulating sheath and/or at least one electrically insulated flexible circuit (40).

16. The device as claimed in claim 15, comprising at least one circuit (43) outside the hybrid inverter (30), connected to the low-level control interface (40), comprising at least one part (45) covered with a plastic electric insulation.

17. The device as claimed in any one of the preceding claims, wherein at least one electric insulation of a range (3, 4) comprises at least one electrostatic chamber.

18. A system for controlling electric actuators of a space launcher comprising a device as claimed in any one of claims 10 to 17, the polyphase electric motor activating an actuator.

19. A space launcher provided with a system as claimed in claim 18.
